(19) **Europäisches Patentamt / European Patent Office / Office européen des brevets**

(11) **EP 4 280 638 A1**

(12) # EUROPEAN PATENT APPLICATION
published in accordance with Art. 153(4) EPC

(43) Date of publication:
**22.11.2023 Bulletin 2023/47**

(21) Application number: **21919637.5**

(22) Date of filing: **10.12.2021**

(51) International Patent Classification (IPC):
**H04W 4/50** (2018.01)  **H04W 68/00** (2009.01)
**H04W 88/06** (2009.01)

(52) Cooperative Patent Classification (CPC):
**H04W 4/50; H04W 68/00; H04W 88/06**

(86) International application number:
**PCT/JP2021/045585**

(87) International publication number:
**WO 2022/153748 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.01.2021 JP 2021003802**

(71) Applicants:
• **DENSO CORPORATION**
  **Kariya-city, Aichi 448-8661 (JP)**
• **TOYOTA JIDOSHA KABUSHIKI KAISHA**
  **Toyota-shi**
  **Aichi 471-8571 (JP)**

(72) Inventors:
• **YAMAMOTO, Tomoyuki**
  **Kariya-city, Aichi-pref. 448-8661 (JP)**
• **TAKAHASHI, Hideaki**
  **Kariya-city, Aichi-pref. 448-8661 (JP)**

(74) Representative: **TBK**
  **Bavariaring 4-6**
  **80336 München (DE)**

(54) **USER EQUIPMENT AND BASE STATION**

(57) A user equipment according to an aspect of the present disclosure includes: a communication processing unit configured to communicate with a base station of a first mobile network; and an information obtaining unit configured to obtain gap related information regarding a time gap for the user equipment to receive a paging to the user equipment in a second mobile network. The communication processing unit is configured to transmit, to the base station, a radio resource control, RRC, message including the gap related information. The RRC message is an RRCSetupComplete message, an RRCReestablishmentComplete message, an RRCResumeComplete message, a UEAssistanceInformation message, or the like.

FIG.7

EP 4 280 638 A1

**Description**

CROSS-REFERENCE TO RELATED APPLICATIONS

This application is based on and claims the benefit of priority from Japanese Patent Application No. 2021-003802, filed on January 13, 2021, the entire content of which is incorporated herein by reference.

[Technical Field]

The present disclosure relates to a user equipment and a base station.

[Background Art]

In 3rd Generation Partnership Project (3GPP) Release 17, a work item has been launched for formulating functions to monitor for information of incoming call (for example, voice or data) from multiple telecommunications operators' networks for devices equipped with multiple subscriber identity module (SIM) cards.
For example, non-patent literatures (NPLs) 1 to 4 describe that time gaps are introduced for a multi-subscriber identity module (SIM) user equipment (UE) to receive, when the UE is in a connected state in a mobile network, a paging in another mobile network. In particular, NPL 4 describes that the multi-SIM UE requests a preferred time gap from a current network, and the network confirms or configures the preferred time gap.

[Citation List]

[Non-Patent Literature]

NPL 1: 3GPP TSG-RAN WG2 Meeting #112e, Online, 2nd - 13th Nov 2020, R2-2009325, vivo, "E-mail discussion: [Post111-e][917][Multi-SIM] Multi-Sim (vivo)"
NPL 2: 3GPP TSG-RAN WG2 Meeting #112 Electronic, Elbonia, November 2nd - November 13th, 2020, R2-2009265, Nokia, Nokia Shanghai Bell, "Scenarios and Impact analysis for Switching Notification"
NPL 3: 3GPP TSG-RAN WG2 Meeting #112-e, Electronic, 2-13 November 2020, R2-2009557, Qualcomm Incorporated, Switching between two links for Multi-SIM
NPL 4: 3GPP TSG-RAN WG2 Meeting #112-e, Online, 2 November 2020 - 13 November 2020, R2-2010350, Samsung, Discussion on switching mechanism for multi-SIM

[Summary of the Invention]

A detailed study by the inventors has revealed an issue that NPL 4, which describes that the multi-SIM UE requests a preferred time gap from the network, does not describe how to specifically realize the request, and no appropriate procedures for using the time gap are not yet clear.
An object of the present disclosure is to provide a user equipment and a base station that enables the LTE to use a time gap for the LTE to receive a paging in another mobile network.
A user equipment according to an aspect of the present disclosure includes: a communication processing unit configured to communicate with a base station of a first mobile network; and an information obtaining unit configured to obtain gap related information regarding a time gap for the user equipment to receive a paging to the user equipment in a second mobile network. The communication processing unit is configured to transmit, to the base station, a radio resource control, RRC, message including the gap related information. The RRC message is an RRCSetupComplete message, an RRCReestablishmentComplete message, an RRCResumeComplete message, a UEAssistanceInformation message, an RRCConnectionSetupComplete message, or an RRCConnectionReestablishmentComplete message.
A user equipment according to an aspect of the present disclosure includes: a communication processing unit configured to communicate with a base station of a first mobile network; and an information obtaining unit configured to obtain gap related information regarding a time gap for the user equipment to receive a paging to the user equipment in a second mobile network. The communication processing unit is configured to transmit, to the base station, a radio resource control, RRC, message including the gap related information. The RRC message is an RRC message defined for the time gap.
A base station of a first mobile network according to an aspect of the present disclosure includes: a communication processing unit configured to receive, from a user equipment, a radio resource control, RRC, message including gap related information regarding a time gap for the user equipment to receive a paging to the user equipment in a second mobile network; and an information obtaining unit (141) configured to obtain the gap related information included in the RRC message. The RRC message is an RRCSetupComplete message, an RRCReestablishmentComplete message, an RRCResumeComplete message, a LTEAssistanceInformation message, an RRCConnectionSetupComplete message, or an RRCConnectionReestablishmentComplete message.

A base station of a first mobile network according to an aspect of the present disclosure includes: a communication processing unit configured to receive, from a user equipment, a radio resource control, RRC, message including gap related information regarding a time gap for the user equipment to receive a paging to the user equipment in a second mobile network; and an information obtaining unit configured to obtain the gap related information included in the RRC message. The RRC message is an RRC message defined for the time gap.

The present disclosure enables a user equipment to use a time gap for the user equipment to receive a paging in another mobile network. Note that the present disclosure may yield another advantageous effect instead of or in addition to this advantageous effect.

[Brief Description of Drawings]

FIG. 1 is an explanatory diagram illustrating an example of a schematic configuration of a system according to embodiments of the present disclosure.

FIG. 2 is an explanatory diagram for explaining an example of a case where a user equipment according to embodiments of the present disclosure is equipped with two SIM cards.

FIG. 3 is a block diagram illustrating an example of a schematic functional configuration of a base station according to embodiments of the present disclosure.

FIG. 4 is a block diagram illustrating an example of a schematic hardware configuration of the base station according to embodiments of the present disclosure.

FIG. 5 is a block diagram illustrating an example of a schematic functional configuration of a user equipment according to embodiments of the present disclosure.

FIG. 6 is a block diagram illustrating an example of a schematic hardware configuration of the user equipment according to embodiments of the present disclosure.

FIG. 7 is a flowchart for explaining an example of a schematic flow of processing according to embodiments of the present disclosure.

FIG. 8 is a flowchart for explaining an example of a schematic flow of processing according to a second modification example of embodiments of the present disclosure.

FIG. 9 is a flowchart for explaining a first example of a schematic flow of processing according to a fifth modification example of embodiments of the present disclosure.

FIG. 10 is a flowchart for explaining a second example of a schematic flow of processing according to the fifth modification example of embodiments of the present disclosure.

[Description of Embodiments]

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:

1. Configuration of System
2. Configuration of Base Station
3. Configuration of User Equipment
4. First Embodiment

    4. 1. Operation Examples
    4. 2. Modification Examples

5. Second Embodiment

    5. 1. Operation Examples
    5. 2. Modification Examples

«1. Configuration of System»

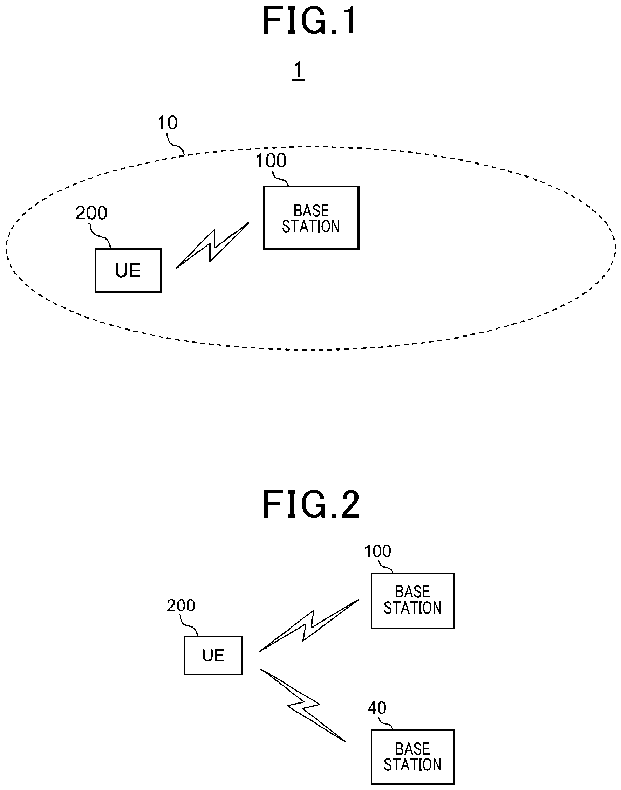

A configuration example of a system 1 according to embodiments of the present disclosure will be described with reference to FIG. 1. Referring to FIG. 1, the system 1 includes a base station 100 and a user equipment (UE) 200.

For example, the system 1 is a system compliant with technical specifications (TSs) of 3GPP. More specifically, for example, the system 1 is a system compliant with TSs of 5G or new radio (NR). Alternatively, the system 1 may be a system compliant with TSs of long term evolution (LTE), LTE advanced (LTE-A), or 4th generation (4G). Naturally, the system 1 is not limited to this example.

(1) Base Station 100

The base station 100 is a node in a radio access network (RAN) and communicates with a LTE (for example, LTE 200) located within a coverage area 10 of the base station 100.

For example, the base station 100 communicates with a UE (for example, UE 200) using a RAN protocol stack. For example, the protocol stack includes a radio resource control (RRC) layer, a service data adaptation protocol (SDAP) layer, a packet data convergence protocol (PDCP) layer, a radio link control (RLC) layer, a medium access control (MAC) layer, and a physical (PHY) layer. Alternatively, the protocol stack may include some, but not all, of these layers.

For example, the base station 100 is a gNB. The gNB is a node that provides NR user plane and control plane protocol terminations towards a UE and is connected to the 5G core network (5GC) via an NG interface. The base station 100 may be an en-gNB. Alternatively, the base station 100 may be an eNB or an ng-eNB.

The base station 100 may include a plurality of nodes. The plurality of nodes may include a first node that hosts higher layers included in the protocol stack, and a second node that hosts lower layers included in the protocol stack. The higher layers may include the RRC layer, the SDAP layer, and the PDCP layer, while the lower layers may include the RLC layer, the MAC layer, and the PHY layer. The first node may be a central unit (CU), and the second node may be a distributed unit (DU). Note that the plurality of nodes may include a third node that performs lower processing of the PHY layer, and the second node may perform higher processing of the PHY layer. The third node may be a radio unit (RU).

Alternatively, the base station 100 may be one of the plurality of nodes, and may be connected to another unit of the plurality of nodes.

The base station 100 may be an integrated access and backhaul (IAB) donor or an IAB node.

(2) UE 200

The UE 200 communicates with a base station. For example, the UE 200 communicates with the base station 100 when being located within the coverage area 10 of the base station 100.

For example, the UE 200 communicates with a base station (for example, base station 100) using the protocol stack.

In particular, the UE 200 is capable of being equipped with two or more SIM cards. That is, the LTE 200 is a multi-SIM UE or a multi-SIM device. The LTE 200 is capable of communicating in two or more mobile networks respectively corresponding to the two or more SIM cards.

For example, the LTE 200 can communicate in a mobile network (hereinafter, referred to as "first mobile network") that corresponds to one of the two or more SIM cards and includes the base station 100. Further, the UE 200 can communicate in another mobile network (hereinafter, referred to as "second mobile network") that corresponds to another one of the two or more SIM cards. The first mobile network is different from the second mobile network.

Referring to the example of FIG. 2, for example, the UE 200 can communicate in the first mobile network including the base station 100 and in the second mobile network including a base station 40. For example, the LTE 200 may be in an RRC connected state in the first mobile network, and may be in an RRC idle state or RRC inactive state in the second mobile network. In such a case, while the UE 200 is connected to the base station 100 in the first mobile network, the base station 40 may transmit a paging message to be received by the UE 200 in the second mobile network.

«2. Configuration of Base Station»

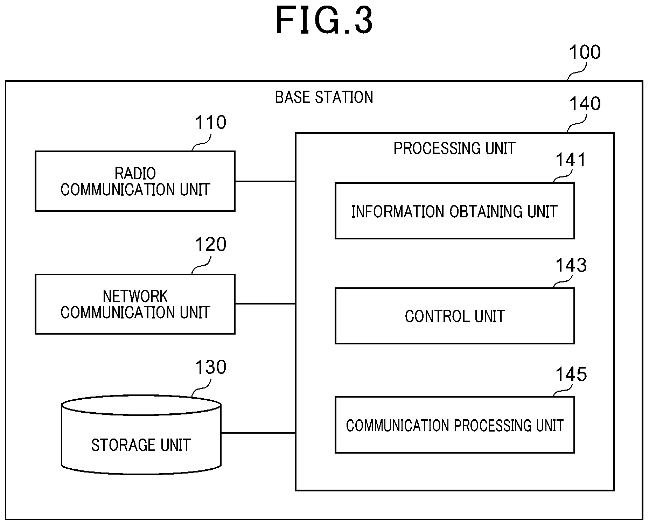

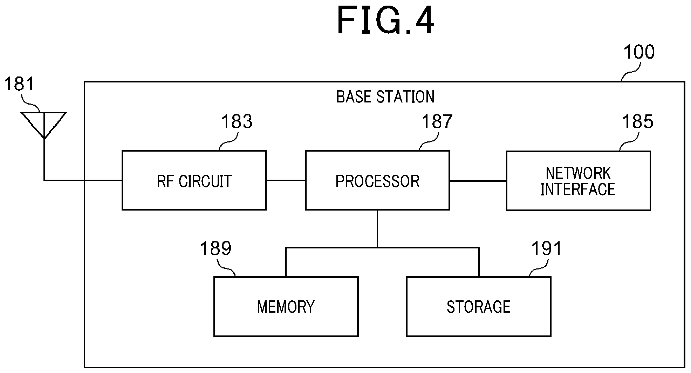

A configuration example of the base station 100 according to embodiments of the present disclosure will be described with reference to FIGS. 3 and 4.

(1) Functional Configuration

First, a functional configuration example of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives signals from and transmits signals to a UE.

The network communication unit 120 receives signals from and transmits signals to the network.

The storage unit 130 stores various information.

The processing unit 140 provides various functions of the base station 100. The processing unit 140 includes an information obtaining unit 141, a control unit 143, and a communication processing unit 145. Note that the processing unit 140 may further include a component other than these components. That is, the processing unit 140 may also perform an operation other than operations of these components. Specific operations of the information obtaining unit 141, the control unit 143, and the communication processing unit 145 will be described in detail later.

For example, the processing unit 140 (communication processing unit 145) communicates with a UE (for example, UE 200) via the radio communication unit 110. For example, the processing unit 140 communicates with other nodes (for example, network nodes within the core network or other base stations) via the network communication unit 120.

(2) Hardware Configuration

Next, a hardware configuration example of the base station 100 according to embodiments of the present disclosure will be described with reference to FIG. 4. Referring to FIG. 4, the base station 100 includes an antenna 181, an RF circuit 183, a network interface 185, a processor 187, a memory 189, and a storage 191.

The antenna 181 converts signals into radio waves, and emits the radio waves into the air. In addition, the antenna 181 receives radio waves in the air, and converts the radio waves into signals. The antenna 181 may include a transmitting antenna and a receiving antenna, or may be a single antenna for transmission and reception. The antenna 181 may be a directional antenna, and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor, and transmits signals to and receives signals from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors, or may be a single processor. The plurality of processors may include a baseband processor that performs the digital processing and one or more processors that perform other processing.

The memory 189 stores a program to be executed by the processor 187, parameters related to the program, and data related to the program. The memory 189 may include at least one of a read only memory (ROM), an erasable programmable read only memory (EPROM), an electrically erasable programmable read only memory (EEPROM), a random access memory (RAM), and a flash memory. All or part of the memory 189 may be included in the processor 187.

The storage 191 stores various information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or all of the processing unit 140 may be virtualized. In other words, part or all of the processing unit 140 may be implemented as a virtual machine. In this case, part or all of the processing unit 140 may operate as a virtual machine on a physical machine including a processor, a memory, and the like (that is, hardware) and a hypervisor.

Given the hardware configuration described above, the base station 100 may include a memory (that is, memory 189) that stores a program and one or more processors (that is, processor 187) capable of executing the program, and the one or more processors may be configured to execute the program to perform operations of the processing unit 140. The program may be a program for causing the processors to execute the operations of the processing unit 140.

<<3. Configuration of User Equipment>>

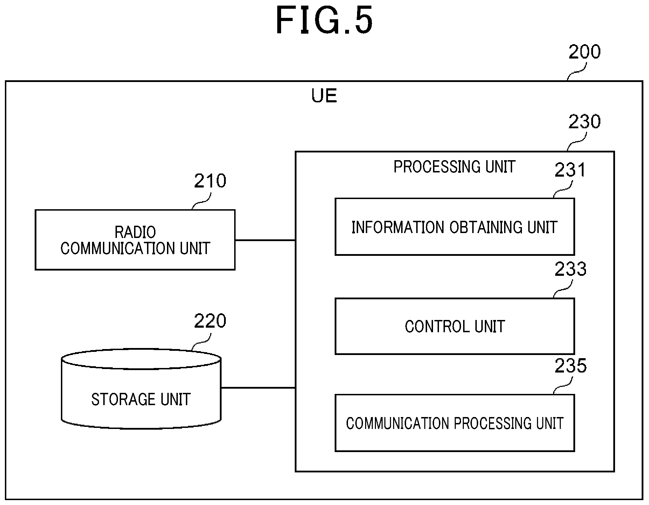

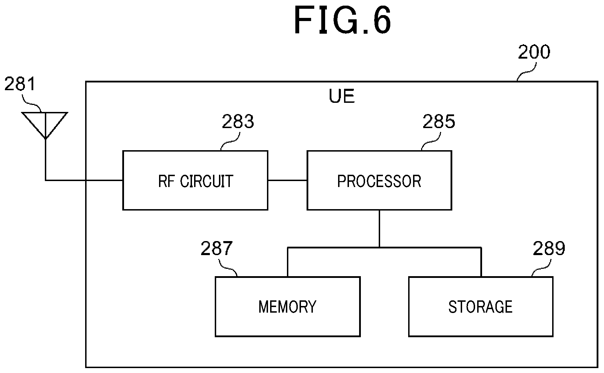

A configuration example of the UE 200 according to embodiments of the present disclosure will be described with reference to FIGS. 5 and 6.

(1) Functional Configuration

First, a functional configuration example of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives signals from and transmits signals to a base station. For example, the radio communication unit 210 receives signals from and transmits signals to another UE.

The storage unit 220 stores various information.

The processing unit 230 provides various functions of the UE 200. The processing unit 230 includes an information obtaining unit 231, a control unit 233, and a communication processing unit 235. Note that the processing unit 230 may further include a component other than these components. That is, the processing unit 230 may also perform an operation other than operations of these components. Specific operations of the information obtaining unit 231, the control unit 233, and the communication processing unit 235 will be described in detail later.

For example, the processing unit 230 (communication processing unit 235) communicates with a base station (for example, base station 100 or base station 40) or another LTE via the radio communication unit 210.

(2) Hardware Configuration

Next, a hardware configuration example of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves, and emits the radio waves into the air. In addition, the antenna 281 receives radio waves in the air, and converts the radio waves into signals. The antenna 281 may include a transmitting antenna and a receiving antenna, or may be a single antenna for transmission and reception. The antenna 281 may be a directional antenna, and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors, or may be a single processor. The plurality of processors may include a baseband processor that performs the digital processing and one or more processors that perform other processing.

The memory 287 stores a program to be executed by the processor 285, parameters related to the program, and data related to the program. The memory 287 may include at least one of a ROM, an EPROM, an EEPROM, a RAM, and a flash memory. All or part of the memory 287 may be included in the processor 285.

The storage 289 stores various information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on chip (SoC) including the processor 285 and the memory 287. The SoC may include the RF circuit 283, and the radio communication unit 210 may also be implemented by this SoC.

Given the hardware configuration described above, the LTE 200 may include a memory (that is, memory 287) that stores a program and one or more processors (that is, processor 285) capable of executing the program, and the one or more processors may be configured to execute the program to perform operations of the processing unit 230. The program may be a program for causing the processors to execute the operations of the processing unit 230.

<<4. First Embodiment>>

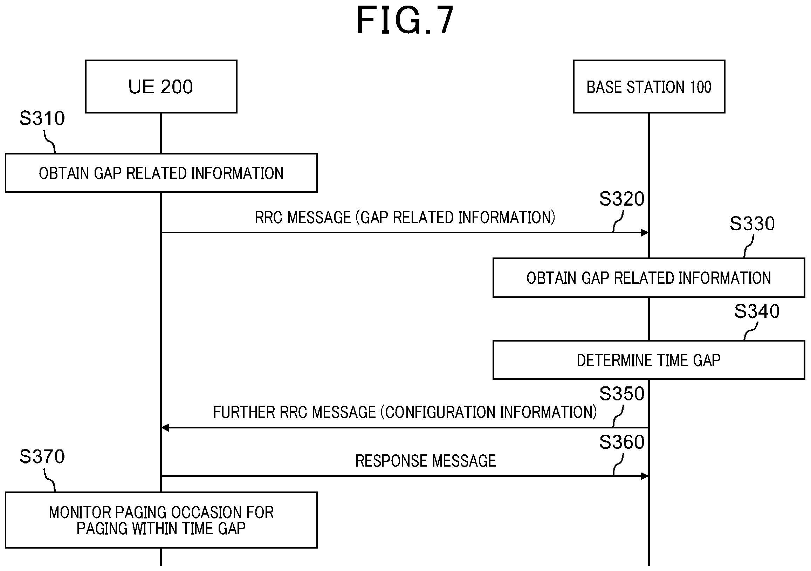

A first embodiment of the present disclosure will be described with reference to FIGS. 7 to 10.

<4. 1. Operation Examples>

Operation examples of the base station 100 and the UE 200 according to the first embodiment will be described with reference to FIG. 7.

The UE 200 (communication processing unit 235) communicates with the base station 100 of the first mobile network. For example, the UE 200 is in an RRC connected state in the first mobile network and is connected to the base station 100. Meanwhile, the UE 200 is in an RRC idle state or RRC inactive state in the second mobile network.

The UE 200 (information obtaining unit 231) obtains gap related information regarding a time gap for the UE 200 to receive a paging to the UE 200 in the second mobile network. The UE 200 (communication processing unit 235) transmits an RRC message including the gap related information to the base station 100.

The base station 100 (communication processing unit 145) receives the RRC message from the UE 200. The base station 100 (information obtaining unit 141) obtains the gap related information included in the RRC message.

(1) RRC Message

In the first embodiment in particular, the RRC message is one of the following messages.

- RRCSetupComplete message
- RRCReestablishmentComplete message
- RRCResumeComplete message
- UEAssistanceInformation message
- RRCConnectionSetupComplete message
- RRCConnectionReestablishmentComplete message

That is, the gap related information is transmitted in an existing RRC message.

This, for example, as specifically described later, enables the UE 200 to use a time gap for the UE 200 to receive a paging in the second mobile network. In particular, since an existing RRC message is used for transmitting the gap related information, the UE 200 can transmit the gap related information to the base station 100 within the existing procedure. Therefore, it is possible to alleviate an increase in overhead. In addition, it is possible to avoid procedures becoming complicated due to introduction of a new procedure.

(2) Time Gap

For example, the time gap includes a paging occasion of the paging in the second mobile network. As an example, the time gap coincides with the paging occasion. With such a time gap, for example, the LTE 200 can receive the paging in the second mobile network without missing it.

For example, as described later, the base station 100 (control unit 143) determines the time gap.

(3) Gap Related Information

- Request Information

For example, the gap related information includes request information to request the base station 100 to configure the time gap.

The request information may be information only indicating that the base station 100 is requested to configure the time gap. Alternatively, the request information may be information indicating whether or not the base station 100 is requested to configure the time gap.

- Parameter Set

For example, the gap related information includes a parameter set that assists configuration of the time gap. This, for example, makes it possible to configure a more appropriate time gap.

Specifically, for example, the parameter set includes a paging parameter set for identifying a paging frame and a paging occasion of the paging in the second mobile network. This, for example, makes it possible to configure a time gap including a paging occasion of the paging.

For example, firstly, the paging parameter set includes configuration information for the paging. Specifically, for example, the configuration information is PCCH-Config, or all or part of the parameters included in PCCH-Config. This configuration information is included in system information transmitted in the second mobile network. The UE 200 (communication processing unit 235) receives the system information in the second mobile network. Then, the UE 200 (information obtaining unit 231) obtains the configuration information included in the system information. Note that a name of a parameter included in the gap related information is not necessarily the same as a name of a parameter included in the system information. That is, the parameter included in the system information may be included in the gap related information under a different name.

For example, in a case where the base station 40 of the second mobile network is compliant with TSs of 5G/NR, the PCCH-Config includes defaultPagingCycle, nAndPagingFrameOffset, ns, and firstPDCCH-MonitoringOccasionOf-PO. defaultPagingCycle is a default paging cycle and is used to derive T described later. nAndPagingFrameOffset is used to derive the number of total paging frames in T described later and paging frame offset. ns is the number of paging occasions per paging frame. firstPDCCH-MonitoringOccasionOfPO points out the first physical downlink control channel (PDCCH) monitoring occasion for paging of each paging occasion of the paging frame.

For example, in a case where the base station 40 of the second mobile network is compliant with TSs of 4G/LTE, the PCCH-Config includes defaultPagingCycle and nB. defaultPagingCycle is a default paging cycle and is used to derive T described later. nB is used as one of parameters to derive the paging frame and the paging occasion.

For example, secondly, the paging parameter set includes an ID of the UE 200 in the second mobile network. For example, in the case where the base station 40 of the second mobile network is compliant with TSs of 5G/NR, the ID is 5G-S-Temporary Mobile Subscriber Identity (5G-S-TMSI) of the UE 200 in the second mobile network, or 10 least significant bits of the 5G-S-TMSI. For example, in the case where the base station 40 of the second mobile network is compliant with TSs of 4G/LTE, the ID is International Mobile Subscriber Identity (IMSI) of the UE 200 in the second mobile network, or 10 least significant bits of the IMSI.

This, for example, makes it possible to identify the paging frame and the paging occasion.

-- Paging Frame (5G/NR Case)

In the case where the base station 40 of the second mobile network is compliant with TSs of 5G/NR, the paging frame is determined by the following formula.

$$(\text{SFN} + \text{PF\_offset}) \bmod T = (T \operatorname{div} N)*(\text{UE\_ID} \bmod N)$$

SFN is the system frame number (SFN) of the paging frame. PF_offset is offset used to determine the paging frame. T is the discontinuous reception (DRX) cycle of the UE 200. UE_ID is the 10 least significant bits of the 5G-S-TMSI. N is the number of total paging frames in T.

For example, T is indicated by defaultPagingCycle included in PCCH-Config. For example, N and PF_offset are indicated by nAndPagingFrameOffset included in PCCH-Config.

-- Paging Occasion (5G/NR Case)

In the case where the base station 40 of the second mobile network is compliant with TSs of 5G/NR, the paging occasion is determined by the following formula.

$$i\_s = \operatorname{floor}(\text{UE\_ID}/N) \bmod Ns$$

i_s denotes an index of the paging occasion. UE_ID is the 10 least significant bits of the 5G-S-TMSI. N is the number of total paging frames in T. T is the DRX cycle of the UE 200. Ns is the number of paging occasions for the paging frame.

For example, N is indicated by nAndPagingFrameOffset included in PCCH-Config. Ns is indicated by ns included in PCCH-Config.

The paging occasion is associated with the paging frame. For example, the paging occasion starts within or after the paging frame.

-- Paging Frame (4G/LTE Case)

In the case where the base station 40 of the second mobile network is compliant with TSs of 4G/LTE, the paging frame is determined by the following formula.

$$\text{SFN} \bmod T = (T \operatorname{div} N)*(\text{UE\_ID} \bmod N)$$

SFN is the SFN of the paging frame. T is the DRX cycle of the UE 200. N is the smaller of T and nB. nB is a configured parameter. UE_ID is the 10 least significant bits of the IMSI.

For example, T is indicated by defaultPagingCycle included in PCCH-Config. nB is indicated by nB included in PCCH-Config.

-- Paging Occasion (4G/LTE Case)

In the case where the base station 40 of the second mobile network is compliant with TSs of 4G/LTE, the paging occasion is determined by the following formula.

$$i\_s = floor(UE\_ID/N) \bmod Ns$$

i_s denotes an index of the paging occasion. UE_ID is the 10 least significant bits of the IMSI. N is the smaller of T and nB. T is the DRX cycle of the UE 200, and nB is a configured parameter. Ns is the larger of 1 and nB/T.

For example, T is indicated by defaultPagingCycle included in PCCH-Config. nB is indicated by nB included in PCCH-Config.

- Request Information and Parameter Set

Note that the gap related information may include not the request information but the parameters described above. In this case, the presence of the parameter set may implicitly request the base station 100 to configure the time gap.

(4) Determination of Time Gap

For example, the base station 100 (control unit 143) determines the time gap based on the gap related information.

As described above, as an example, the time gap coincides with the paging occasion. In this case, the time gap determined by the base station 100 (control unit 143) is the paging occasion identified by the paging parameter set.

(5) Configuration of Time Gap

For example, the base station 100 (communication processing unit 145) transmits, to the UE 200, a further RRC message including configuration information of the time gap. The UE 200 (communication processing unit 235) receives the further RRC message from the base station 100.

For example, the configuration information includes PCCH-Config included in the gap related information, or all or part of the parameters included in the PCCH-Config.

For example, the further RRC message is an RRCReconfiguration message or an RRCConnectionReconfiguration message.

With this, for example, the time gap is duly shared between the base station 100 and the LTE 200.

(6) Reception of Paging in Time Gap

For example, the UE 200 (communication processing unit 145) monitors for the paging in the second mobile network based on the configuration information.

More specifically, for example, the UE 200 (communication processing unit 145) monitors a paging occasion of the paging within the time gap for the paging in the second mobile network. For example, when there is a paging to the UE 200 in the paging occasion, the UE 200 (communication processing unit 145) receives the paging. That is, the LTE 200 (communication processing unit 145) receives a paging message transmitted by the base station 40.

For example, the base station 100 (communication processing unit 145) does not communicate with the UE 200 within the time gap.

This, for example, enables the UE 200 to avoid interruption of communication in the first mobile network while monitoring for a paging in the second mobile network.

(7) Flow of Processing

An example of processing according to the first embodiment will be described with reference to FIG. 7.

The UE 200 obtains gap related information regarding a time gap for the UE 200 to receive a paging to the LTE 200 in the second mobile network (S310).

The UE 200 transmits an RRC message including the gap related information to the base station 100 (S320). The base station 100 receives the RRC message from the UE 200. The RRC message is an RRCSetupComplete message, an RRCReestablishmentComplete message, an RRCResumeComplete message, a UEAssistanceInformation message, an RRCConnectionSetupComplete message, or an RRCConnectionReestablishmentComplete message.

The base station 100 obtains the gap related information included in the RRC message (S330).

The base station 100 determines the time gap based on the gap related information (S340).

The base station 100 transmits, to the UE 200, a further RRC message including configuration information of the time gap (S350). The UE 200 receives the further RRC message from the base station 100. For example, the further RRC message is an RRCReconfiguration message or an RRCConnectionReconfiguration message.

The UE 200 transmits a response message to the base station 100 in response to the further RRC message (S360). The base station 100 receives the response message. The response message is an RRC message such as, for example, an RRCReconfigurationComplete message or an RRCConnectionReconfigurationComplete message.

The UE 200 monitors a paging occasion of the paging within the time gap for the paging in the second mobile network based on the configuration information (S370). The base station 100 does not communicate with the UE 200 within the time gap.

<4. 2. Modification Examples>

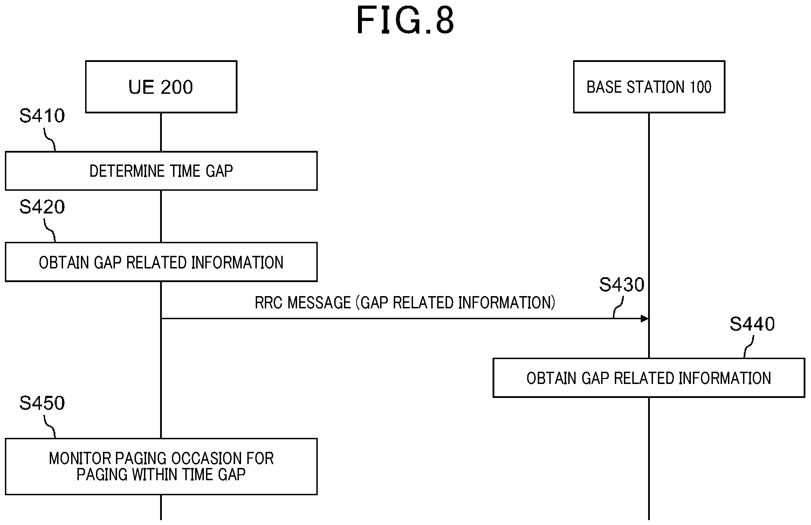

First to sixth modification examples according to the first embodiment will be described with reference to FIGS. 8 to 10. Note that two or more of these modification examples may be combined.

(1) First Modification Example

In the above-described example of the first embodiment, the paging parameter set for identifying a paging frame and a paging occasion of the paging includes configuration information for the paging (for example, PCCH-Config, or all or part of the parameters included in PCCH-Config) and the ID of the UE 200. However, the paging parameter set according to the first embodiment is not limited to this example.

As a first modification example of the first embodiment, the paging parameter set may not include the ID of the UE 200.

- First Example

The paging parameter set may include configuration information for the paging (for example, PCCH-Config, or all or part of the parameters included in PCCH-Config), an SFN of at least one paging frame of the paging, and an index of a paging occasion of the paging.

The SFN of at least one paging frame may be one minimum SFN. The index may be i_s described above.

This, for example, makes it possible to identify a paging frame and a paging occasion of the paging without an ID of the UE 200. Therefore, a privacy issue due to transmission of an ID of the UE 200 can be solved.

- Second Example

Alternatively, the paging parameter set may include a cycle of paging frames of the paging, an SFN of at least one paging frame of the paging, and an index of a paging occasion of the paging.

The cycle may be T described above. The SFN of at least one paging frame may be one minimum SFN. The index may be i_s described above.

This, for example, makes it possible to identify a paging frame and a paging occasion of the paging without an ID of the UE 200. Therefore, a privacy issue due to transmission of an ID of the UE 200 can be solved.

(2) Second Modification Example

In the above-described example of the first embodiment, the base station 100 (control unit 143) determines the time gap. However, the first embodiment is not limited to this example.

- Determination of Time Gap

As a second modification example of the first embodiment, the LTE 200 (control unit 233) may determine the time gap.

As described above as an example of the first embodiment, the time gap includes a paging occasion of the paging in the second mobile network. As an example, the time gap coincides with the paging occasion.

The UE 200 (communication processing unit 235) may receive the system information in the second mobile network, and the UE 200 (information obtaining unit 231) may obtain the configuration information for the paging (for example, PCCH-Config) included in the system information. Then, the UE 200 (control unit 233) may determine the paging frame and the paging occasion based on the configuration information for the paging (for example, PCCH-Config) and an ID of the UE 200 in the second mobile network, and determine the time gap.

With such determination by the UE 200, the signaling for configuration of the time gap can be omitted. Therefore, overhead can be reduced.

- Gap Related Information

The gap related information transmitted by the UE 200 to the base station 100 may include a parameter set for identifying the time gap. This, for example, enables the base station 100 to know the time gap determined by the UE 200.
The parameter set may include a paging parameter set for identifying a paging frame and a paging occasion of the paging in the second mobile network. Specific descriptions of the paging parameter set are the same as the descriptions in the first embodiment and the descriptions in the first modification example of the first embodiment. Thus, duplicate descriptions are omitted here.

- Configuration of Time Gap

In the second modification example of the first embodiment, the base station 100 may not transmit configuration information of the time gap to the UE 200.

- Flow of Processing

An example of processing according to the second modification example of the first embodiment will be described with reference to FIG. 8.
The UE 200 determines a time gap for the UE 200 to receive a paging to the UE 200 in the second mobile network (S410).
The UE 200 obtains gap related information regarding the time gap (S420). The gap related information includes a parameter set for identifying the time gap.
The UE 200 transmits an RRC message including the gap related information to the base station 100 (S430). The base station 100 receives the RRC message from the UE 200. The RRC message is an RRCSetupComplete message, an RRCReestablishmentComplete message, an RRCResumeComplete message, a UEAssistanceInformation message, an RRCConnectionSetupComplete message, or an RRCConnectionReestablishmentComplete message. Note that the base station 100 (communication processing unit 145) may transmit a confirmation message to the UE 200 in response to reception of the RRC message.
The base station 100 obtains the gap related information included in the RRC message (S440).
The UE 200 monitors a paging occasion of the paging within the time gap for the paging in the second mobile network (S450). The base station 100 does not communicate with the UE 200 within the time gap.

(3) Third Modification Example

In the above-described example of the first embodiment, the time gap includes a paging occasion of the paging in the second mobile network and is determined by the base station 100. As an example, the time gap coincides with the paging occasion. However, a time gap according to the first embodiment is not limited to this example.

- Time Gap

As a third modification example of the first embodiment, the time gap may be a measurement gap for the UE 200 to receive the paging. That is, an existing measurement gap may be used as the time gap.
In this manner, it is possible to avoid procedures becoming complicated in a mobile network by using an existing measurement gap without defining a new gap.

- Determination of Time Gap

Also in the third modification example of the first embodiment, as in the above-described example of the first embodiment, the base station 100 (control unit 143) may determine the time gap. In the third modification example in particular, the time gap is the measurement gap, and the base station 100 (control unit 143) may determine the measurement gap.
The base station 100 (control unit 143) may identify a paging frame and a paging occasion of the paging based on the paging parameter set included in the gap related information. Then, the base station 100 (control unit 143) may determine the measurement gap so that the measurement gap will include part or all of the paging occasion.

- Configuration of Time Gap

As described above as an example of the first embodiment, the base station 100 (communication processing unit 145) transmits, to the UE 200, a further RRC message including configuration information of the time gap. The UE 200 (communication processing unit 235) receives the further RRC message from the base station 100.

In the third modification example of the first embodiment, the time gap may be the measurement gap, and the configuration information may be configuration information of the measurement gap. More specifically, the configuration information may include a measurement gap parameter set for identifying the measurement gap.

The measurement gap parameter set may include gapOffset, mgl, mgrp, and mgta. mgl is the measurement gap length of the measurement gap. mgrp is the measurement gap repetition period (MGRP) of the measurement gap. mgta is the measurement gap timing advance. gapOffset is the gap offset of the gap pattern with MGRP.

With this, for example, the measurement gap is duly shared between the base station 100 and the UE 200.

- Reception of Paging in Time Gap

As described above as an example of the first embodiment, for example, the UE 200 (communication processing unit 145) monitors for the paging in the second mobile network based on the configuration information.

In the third modification example of the first embodiment, the UE 200 (communication processing unit 145) may monitor a paging occasion of the paging within the measurement gap for the paging in the second mobile network. When there is a paging to the UE 200 in the paging occasion, the UE 200 (communication processing unit 145) may receive the paging. That is, the UE 200 (communication processing unit 145) may receive a paging message transmitted by the base station 40.

For example, the base station 100 (communication processing unit 145) may be configured not to communicate with the UE 200 within the measurement gap.

This, for example, enables the UE 200 to avoid interruption of communication in the first mobile network while monitoring for a paging in the second mobile network.

- Flow of Processing

Descriptions of an example of processing according to the third modification example of the first embodiment are the same as the descriptions of the example of the processing according to the first embodiment described with reference to FIG. 7 except that the time gap is the measurement gap. Thus, duplicate descriptions are omitted here.

(4) Fourth Modification Example

In the second modification example of the first embodiment, the time gap includes a paging occasion of the paging in the second mobile network and is determined by the UE 200. As an example, the time gap coincides with the paging occasion. However, a time gap according to the first embodiment is not limited to this example.

- Time Gap

As a fourth modification example of the first embodiment, the time gap may be a measurement gap for the UE 200 to receive the paging. That is, an existing measurement gap may be used as the time gap.

In this manner, it is possible to avoid procedures becoming complicated in a mobile network by using an existing measurement gap without defining a new gap.

- Determination of Time Gap

Also in the fourth modification example of the first embodiment, as in the second modification example of the first embodiment, the UE 200 (control unit 233) may determine the time gap. In the fourth modification example in particular, the time gap is the measurement gap, and the UE 200 (control unit 233) may determine the measurement gap.

The UE 200 (communication processing unit 235) may receive the system information in the second mobile network, and the UE 200 (information obtaining unit 231) may obtain the configuration information for the paging (for example, PCCH-Config) included in the system information. Then, the UE 200 (control unit 233) may determine the paging frame and the paging occasion based on the configuration information for the paging (for example, PCCH-Config) and an ID of the UE 200 in the second mobile network. Further, the UE 200 (control unit 233) may determine the measurement gap so that the measurement gap will include part or all of the paging occasion.

With such determination by the UE 200, the signaling for configuration of the measurement gap can be omitted.

Therefore, overhead can be reduced.

- Gap Related Information

The gap related information transmitted by the UE 200 to the base station 100 may include a parameter set for identifying the time gap. In the fourth modification example of the first embodiment in particular, since the time gap is the measurement gap, the gap related information may include a measurement gap parameter set for identifying the measurement gap. This, for example, enables the base station 100 to know the measurement gap determined by the UE 200.

The measurement gap parameter set may include gapOffset, mgl, mgrp, and mgta. Descriptions of gapOffset, mgl, mgrp, and mgta are the same as the descriptions in the third modification example of the first embodiment. Thus, duplicate descriptions are omitted here.

- Configuration of Time Gap

In the fourth modification example of the first embodiment, the base station 100 may not transmit configuration information of the measurement gap to the UE 200.

- Flow of Processing

Descriptions of an example of processing according to the fourth modification example of the first embodiment are the same as the descriptions of the example of the processing according to the second modification example of the first embodiment described with reference to FIG. 8 except that the time gap is the measurement gap. Thus, duplicate descriptions are omitted here.

(5) Fifth Modification Example

As a fifth modification example of the first embodiment, the UE 200 (communication processing unit 235) may transmit an RRC message for releasing the time gap (hereinafter, referred to as "release message") to the base station 100. The base station 100 (communication processing unit 145) may receive the release message from the UE 200 and release the time gap.

When monitoring for the paging in the second mobile network is no longer needed and the UE 200 has terminated the monitoring, the UE 200 (communication processing unit 235) may transmit the release message to the base station 100.

After releasing the time gap, the base station 100 (communication processing unit 145) may ignore the time gap in communicating with the UE 200.

This, for example, makes it possible to shorten the duration for which the UE 200 and the base station 100 do not communicate with each other. That is, it is possible to alleviate a reduction in efficiency of the communication between the LTE 200 and the base station 100.

- Release Message

-- Position of Release Message

The release message may be an RRC message that requests the base station 100 to release the time gap. In this case, the base station 100 (communication processing unit 145) may transmit an RRC message that configures release of the time gap, to the LTE 200 in response to reception of the release message.

Alternatively, the release message may be an RRC message that notifies the base station 100 of release of the time gap. In this case, the base station 100 (communication processing unit 145) may not transmit an RRC message that configures release of the time gap to the UE 200.

-- Content of Release Message

As an example, the release message may include information indicative of the time gap being not needed or the time gap being to be released.

As another example, the release message may implicitly indicate the time gap being not needed or the time gap being to be released by not including the gap related information.

-- Specific Examples of Release Message

The release message may be an existing RRC message. As an example, the release message may be a UEAssistanceInformation message.

Alternatively, the release message may be a message defined for the time gap.

- Flow of Processing (First Example)

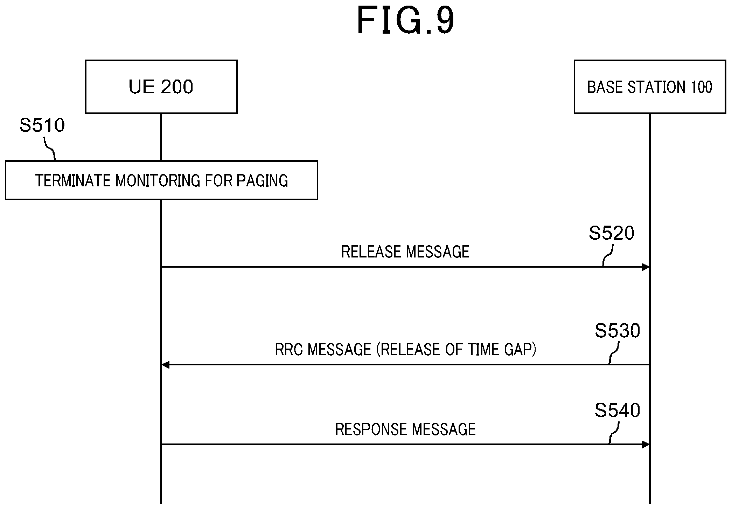

A first example of processing according to the fifth modification example of the first embodiment will be described with reference to FIG. 9.

The UE 200, which no longer needs to monitor for a paging to the LTE 200 in the second mobile network, terminates the monitoring (S510).

The UE 200 transmits, to the base station 100, an RRC message for releasing a time gap for the UE 200 to receive the paging (that is, release message) (S520). The base station 100 receives the release message. In this example in particular, the release message is an RRC message that requests the base station 100 to release the time gap.

The base station 100 transmits an RRC message for configuring release of the time gap to the UE 200 (S530). The UE 200 receives the RRC message. For example, the RRC message is an RRCReconfiguration message or an RRCConnectionReconfiguration message.

The UE 200 transmits a response message to the base station 100 in response to the RRC message (S540). The base station 100 receives the response message. The response message is an RRC message such as, for example, an RRCReconfigurationComplete message or an RRCConnectionReconfigurationComplete message.

- Flow of Processing (Second Example)

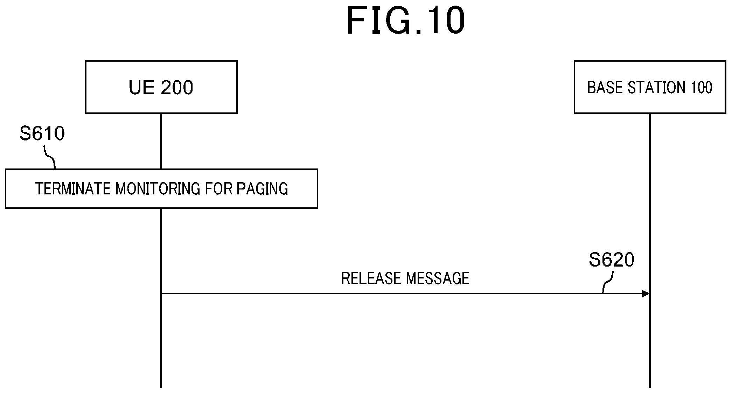

A second example of processing according to the fifth modification example of the first embodiment will be described with reference to FIG. 10.

The UE 200, which no longer needs to monitor for a paging to the LTE 200 in the second mobile network, terminates the monitoring (S610).

The UE 200 transmits, to the base station 100, an RRC message for releasing a time gap for the UE 200 to receive the paging (that is, release message) (S620). The base station 100 receives the release message. In this example in particular, the release message is an RRC message that notifies the base station 100 of release of the time gap.

(6) Sixth Modification Example

In the above-described examples of embodiments of the present disclosure, the system 1 is a system compliant with TSs of 5G or NR, or a system compliant with TSs of LTE, LTE-A, or 4G. However, the system 1 according to the first embodiment is not limited to these examples.

As a sixth modification example of the first embodiment, the system 1 may be a system compliant with other 3GPP TSs. As an example, the system 1 may be a system compliant with TSs of next-generation (for example, 6G).

Alternatively, the system 1 may be a system compliant with TSs of another standardization organization for mobile communications.

<<5. Second Embodiment>>

A second embodiment of the present disclosure will be described.

<5. 1. Operation Examples>

Operation examples of the base station 100 and the UE 200 according to the second embodiment will be described.

The UE 200 (communication processing unit 235) communicates with the base station 100 of the first mobile network. For example, the UE 200 is in an RRC connected state in the first mobile network and is connected to the base station 100. Meanwhile, the UE 200 is in an RRC idle state or RRC inactive state in the second mobile network.

The UE 200 (information obtaining unit 231) obtains gap related information regarding a time gap for the UE 200 to receive a paging to the UE 200 in the second mobile network. The UE 200 (communication processing unit 235) transmits an RRC message including the gap related information to the base station 100.

The base station 100 (communication processing unit 145) receives the RRC message from the UE 200. The base station 100 (information obtaining unit 141) obtains the gap related information included in the RRC message.

Note that descriptions of above-described operations are the same as the description of operations in the first embodiment.

(1) RRC Message

In the second embodiment in particular, the RRC message is an RRC message defined for the time gap. That is, the gap related information is transmitted in a new RRC message defined for the time gap.

This, for example, enables the UE 200 to use a time gap for the UE 200 to receive a paging in the second mobile network. In particular, since an RRC message defined for the time gap is used, the UE 100 can transmit the gap related information to the base station 100 with more flexible timing.

(2) Time Gap

Descriptions of the time gap are the same as the descriptions in the first embodiment. Thus, duplicate descriptions are omitted here.

(3) Gap Related Information

Descriptions of the gap related information are the same as the descriptions in the first embodiment. Thus, duplicate descriptions are omitted here.

(4) Determination of Time Gap

Descriptions of determination of the time gap are the same as the descriptions in the first embodiment. Thus, duplicate descriptions are omitted here.

(5) Configuration of Time Gap

Descriptions of configuration of the time gap are the same as the descriptions in the first embodiment. Thus, duplicate descriptions are omitted here.

(6) Reception of Paging in Time Gap

Descriptions of reception of the paging in the time gap are the same as the descriptions in the first embodiment. Thus, duplicate descriptions are omitted here.

(7) Flow of Processing

Descriptions of an example of processing according to the second embodiment are the same as the descriptions of the example of the processing according to the first embodiment except that the RRC message including the gap related information is defined for the time gap. Thus, duplicate descriptions are omitted here.

<5. 2. Modification Examples>

Descriptions of modification examples according to the second embodiment are the same as the descriptions of the modification examples of the first embodiment except that the RRC message including the gap related information is defined for the time gap. Thus, duplicate descriptions are omitted here.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification are not necessarily executed chronologically in the order described in the flowchart or sequence diagram. For example, steps in a process may be executed in an order different from the order described as the flowchart or sequence diagram, or may be executed in parallel. In addition, one or more steps in a process may be removed, or one or more further steps may be added to the process.

For example, there may be provided a method including the operations of one or more components of an apparatus described in the present specification, and there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (UE) may be referred to by another name such as mobile station, mobile terminal, mobile device, mobile unit, subscriber station, subscriber terminal, subscriber device, subscriber unit, wireless station, wireless terminal, wireless device, wireless unit, remote station, remote terminal, remote device, or remote unit.

For example, in the present disclosure, "transmit" may mean performing processing of at least one layer in a protocol stack used for transmission, or physically transmitting signals wirelessly or by wire. Alternatively, "transmit" may mean a combination of performing processing of the at least one layer and physically transmitting signals wirelessly or by wire. Similarly, "receive" may mean performing processing of at least one layer in a protocol stack used for reception, or physically receiving signals wirelessly or by wire. Alternatively, "receive" may mean a combination of performing processing of the at least one layer and physically receiving signals wirelessly or by wire.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that only listed items are included, but mean that only listed items may be included or a further item may be included in addition to the listed items.

For example, in the present disclosure, "or" does not mean exclusive OR but means inclusive OR.

Note that the technical features included in the above-described embodiments may be represented as the following features. Naturally, the present disclosure is not limited to the following features.

(Feature 1)

A user equipment (200) comprising:

a communication processing unit (235) configured to communicate with a base station (100) of a first mobile network; and
an information obtaining unit (231) configured to obtain gap related information regarding a time gap for the user equipment to receive a paging to the user equipment in a second mobile network,
wherein the communication processing unit is configured to transmit, to the base station, a radio resource control, RRC, message including the gap related information, and
wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 2)

A user equipment (200) comprising:

a communication processing unit (235) configured to communicate with a base station (100) of a first mobile network; and
an information obtaining unit (231) configured to obtain gap related information regarding a time gap for the user equipment to receive a paging to the user equipment in a second mobile network,
wherein the communication processing unit is configured to transmit, to the base station, a radio resource control, RRC, message including the gap related information, and
wherein the RRC message is an RRC message defined for the time gap.

(Feature 3)

The user equipment according to Feature 1 or 2, wherein the time gap includes a paging occasion of the paging.

(Feature 4)

The user equipment according to Feature 1 or 2, wherein the time gap is a measurement gap for the user equipment to receive the paging.

(Feature 5)

The user equipment according to any one of Features 1 to 4, wherein the gap related information includes request information to request the base station to configure the time gap.

(Feature 6)

The user equipment according to any one of Features 1 to 5, wherein the communication processing unit is configured to receive, from the base station, a further RRC message including configuration information of the time gap.

(Feature 7)

The user equipment according to Feature 6, wherein the further RRC message is an RRCReconfiguration message or an RRCConnectionReconfiguration message.

(Feature 8)

The user equipment according to Feature 6 or 7, wherein the communication processing unit is configured to monitor for the paging in the second mobile network based on the configuration information.

(Feature 9)

The user equipment according to any one of Features 1 to 8, wherein the gap related information includes a parameter set that assists configuration of the time gap.

(Feature 10)

The user equipment according to any one of Features 1 to 3, further comprising:

a control unit (233) configured to determine the time gap,
wherein the gap related information includes a parameter set for identifying the time gap.

(Feature 11)

The user equipment according to Feature 9 or 10, wherein the parameter set includes a paging parameter set for identifying a paging frame and a paging occasion of the paging.

(Feature 12)

The user equipment according to Feature 11, wherein the paging parameter set includes configuration information for the paging.

(Feature 13)

The user equipment according to Feature 12, wherein the configuration information for the paging is PCCH-Config, or all or part of parameters included in PCCH-Config.

(Feature 14)

The user equipment according to Feature 12 or 13, wherein the paging parameter set includes an ID of the user equipment in the second mobile network.

(Feature 15)

The user equipment according to Feature 14, wherein the ID is 5G-S-Temporary Mobile Subscriber Identity, 5G-S-TMSI, of the user equipment in the second mobile network, 10 least significant bits of the 5G-S-TMSI, International Mobile Subscriber Identity, IMSI, of the user equipment in the second mobile network, or 10 least significant bits of the IMSI.

(Feature 16)

The user equipment according to Feature 12 or 13, wherein the paging parameter set includes a system frame number of at least one paging frame of the paging and an index of a paging occasion of the paging.

(Feature 17)

The user equipment according to Feature 11, wherein the paging parameter set includes a cycle of paging frames of the paging, a system frame number of at least one paging frame of the paging, and an index of a paging occasion of the paging.

(Feature 18)

The user equipment according to Feature 4, further comprising:

a control unit (233) configured to determine the time gap,
wherein the gap related information includes a parameter set for identifying the time gap.

(Feature 19)

The user equipment according to any one of Features 1 to 18, wherein the communication processing unit is configured to monitor a paging occasion of the paging within the time gap for the paging in the second mobile network.

(Feature 20)

The user equipment according to any one of Features 1 to 19, wherein the communication processing unit is configured to transmit, to the base station, an RRC message for releasing the time gap.

(Feature 21)

The user equipment according to Feature 20, wherein the RRC message for releasing the time gap is an RRC message that requests the base station to release the time gap or notifies the base station of release of the time gap.

(Feature 22)

The user equipment according to Feature 20 or 21, wherein the RRC message for releasing the time gap is a UEAssistanceInformation message.

(Feature 23)

The user equipment according to any one of Features 20 to 22, wherein the RRC message for releasing the time gap includes information indicative of the time gap being not needed or the time gap being to be released.

(Feature 24)

The user equipment according to any one of Features 20 to 22, wherein the RRC message for releasing the time gap implicitly indicates the time gap being not needed or the time gap being to be released by not including the gap related information.

(Feature 25)

The user equipment according to any one of Features 1 to 24, wherein the user equipment is capable of being equipped with two or more subscriber identity module, SIM, cards, and is capable of communicating in two or more mobile networks respectively corresponding to the two or more SIM cards.

(Feature 26)

Abase station (100) of a first mobile network comprising:

a communication processing unit (145) configured to receive, from a user equipment (200), a radio resource control, RRC, message including gap related information regarding a time gap for the user equipment to receive a paging to the user equipment in a second mobile network; and
an information obtaining unit (141) configured to obtain the gap related information included in the RRC message, wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 27)

Abase station (100) of a first mobile network comprising:

a communication processing unit (145) configured to receive, from a user equipment (200), a radio resource control, RRC, message including gap related information regarding a time gap for the user equipment to receive a paging to the user equipment in a second mobile network; and
an information obtaining unit (141) configured to obtain the gap related information included in the RRC message, wherein the RRC message is an RRC message defined for the time gap.

(Feature 28)

The base station according to Feature 26 or 27, further comprising:

a control unit (143) configured to determine the time gap based on the gap related information,
wherein the communication processing unit is configured to transmit, to the user equipment, a further RRC message including configuration information of the time gap.

(Feature 29)

The base station according to any one of Features 26 to 28, wherein the communication processing unit is configured not to communicate with the user equipment within the time gap.

(Feature 30)

The base station according to any one of Features 26 to 29, wherein the communication processing unit is configured to receive, from the user equipment, an RRC message for releasing the time gap and release the time gap.

(Feature 31)

A method performed by a user equipment (200), comprising:

communicating with a base station (100) of a first mobile network;
obtaining gap related information regarding a time gap for the user equipment to receive a paging to the user equipment in a second mobile network; and
transmitting, to the base station, a radio resource control, RRC, message including the gap related information, wherein the RRC message is

an RRCSetupComplete message,
an RRCReestablishmentComplete message,
an RRCResumeComplete message,

a UEAssistanceInformation message,
an RRCConnectionSetupComplete message, or
an RRCConnectionReestablishmentComplete message.

(Feature 32)

A method performed by a user equipment (200), comprising:

communicating with a base station (100) of a first mobile network;
obtaining gap related information regarding a time gap for the user equipment to receive a paging to the user equipment in a second mobile network; and
transmitting, to the base station, a radio resource control, RRC, message including the gap related information, wherein the RRC message is an RRC message defined for the time gap.

(Feature 33)

A method performed by a base station (100) of a first mobile network, comprising:

receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 34)

A method performed by a base station (100) of a first mobile network, comprising:

receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is an RRC message defined for the time gap.

(Feature 35)

A program that causes a computer to execute:

communicating with a base station (100) of a first mobile network;
obtaining gap related information regarding a time gap for a user equipment (200) to receive a paging to the user equipment in a second mobile network; and
transmitting, to the base station, a radio resource control, RRC, message including the gap related information, wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 36)

A program that causes a computer to execute:

communicating with a base station (100) of a first mobile network;
obtaining gap related information regarding a time gap for a user equipment (200) to receive a paging to the user equipment in a second mobile network; and
transmitting, to the base station, a radio resource control, RRC, message including the gap related information, wherein the RRC message is an RRC message defined for the time gap.

(Feature 37)

A program that causes a computer to execute:

in a first mobile network, receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 38)

A program that causes a computer to execute:

in a first mobile network, receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is an RRC message defined for the time gap.

(Feature 39)

A non-transitory tangible computer-readable storage medium having stored therein a program that causes a computer to execute:

communicating with a base station (100) of a first mobile network;
obtaining gap related information regarding a time gap for a user equipment (200) to receive a paging to the user equipment in a second mobile network; and
transmitting, to the base station, a radio resource control, RRC, message including the gap related information, wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 40)

A non-transitory tangible computer-readable storage medium having stored therein a program that causes a computer to execute:

communicating with a base station (100) of a first mobile network;
obtaining gap related information regarding a time gap for a user equipment (200) to receive a paging to the user equipment in a second mobile network; and
transmitting, to the base station, a radio resource control, RRC, message including the gap related information, wherein the RRC message is an RRC message defined for the time gap.

(Feature 41)

A non-transitory tangible computer-readable storage medium having stored therein a program that causes a computer to execute:

in a first mobile network, receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

(Feature 42)

A non-transitory tangible computer-readable storage medium having stored therein a program that causes a computer to execute:

in a first mobile network, receiving, from a user equipment (200), a radio resource control, RRC, message including gap related information regarding a time gap for the user equipment to receive a paging to the user equipment in a second mobile network; and
obtaining the gap related information included in the RRC message,
wherein the RRC message is an RRC message defined for the time gap.

**Claims**

1. A user equipment (200) comprising:

a communication processing unit (235) configured to communicate with a base station (100) of a first mobile network; and
an information obtaining unit (231) configured to obtain gap related information regarding a time gap for the user equipment to receive a paging to the user equipment in a second mobile network,
wherein the communication processing unit is configured to transmit, to the base station, a radio resource control, RRC, message including the gap related information, and
wherein the RRC message is

an RRCSetupComplete message,
an RRCReestablishmentComplete message,
an RRCResumeComplete message,
a UEAssistanceInformation message,
an RRCConnectionSetupComplete message, or
an RRCConnectionReestablishmentComplete message.

2. A user equipment (200) comprising:

a communication processing unit (235) configured to communicate with a base station (100) of a first mobile network; and

an information obtaining unit (231) configured to obtain gap related information regarding a time gap for the user equipment to receive a paging to the user equipment in a second mobile network,

wherein the communication processing unit is configured to transmit, to the base station, a radio resource control, RRC, message including the gap related information, and

wherein the RRC message is an RRC message defined for the time gap.

3. The user equipment according to claim 1 or 2, wherein the time gap includes a paging occasion of the paging.

4. The user equipment according to claim 1 or 2, wherein the time gap is a measurement gap for the user equipment to receive the paging.

5. The user equipment according to any one of claims 1 to 4, wherein the gap related information includes request information to request the base station to configure the time gap.

6. The user equipment according to any one of claims 1 to 5, wherein the communication processing unit is configured to receive, from the base station, a further RRC message including configuration information of the time gap.

7. The user equipment according to any one of claims 1 to 6, wherein the gap related information includes a parameter set that assists configuration of the time gap.

8. The user equipment according to any one of claims 1 to 3, further comprising:

a control unit (233) configured to determine the time gap,
wherein the gap related information includes a parameter set for identifying the time gap.

9. The user equipment according to claim 7 or 8, wherein the parameter set includes a paging parameter set for identifying a paging frame and a paging occasion of the paging.

10. The user equipment according to claim 9, wherein the paging parameter set includes configuration information for the paging.

11. The user equipment according to claim 9, wherein the paging parameter set includes a cycle of paging frames of the paging, a system frame number of at least one paging frame of the paging, and an index of a paging occasion of the paging.

12. The user equipment according to claim 4, further comprising:

a control unit (233) configured to determine the time gap,
wherein the gap related information includes a parameter set for identifying the time gap.

13. The user equipment according to any one of claims 1 to 12, wherein the communication processing unit is configured to transmit, to the base station, an RRC message for releasing the time gap.

14. Abase station (100) of a first mobile network comprising:

a communication processing unit (145) configured to receive, from a user equipment (200), a radio resource control, RRC, message including gap related information regarding a time gap for the user equipment to receive a paging to the user equipment in a second mobile network; and

an information obtaining unit (141) configured to obtain the gap related information included in the RRC message, wherein the RRC message is

an RRCSetupComplete message,
an RRCReestablishmentComplete message,
an RRCResumeComplete message,
a UEAssistanceInformation message,
an RRCConnectionSetupComplete message, or

an RRCConnectionReestablishmentComplete message.

15. Abase station (100) of a first mobile network comprising:

a communication processing unit (145) configured to receive, from a user equipment (200), a radio resource control, RRC, message including gap related information regarding a time gap for the user equipment to receive a paging to the user equipment in a second mobile network; and
an information obtaining unit (141) configured to obtain the gap related information included in the RRC message, wherein the RRC message is an RRC message defined for the time gap.

# FIG.1

<u>1</u>

# FIG.2

# FIG.3

BASE STATION    100

PROCESSING UNIT    140

110
RADIO COMMUNICATION UNIT

141
INFORMATION OBTAINING UNIT

120
NETWORK COMMUNICATION UNIT

143
CONTROL UNIT

130
STORAGE UNIT

145
COMMUNICATION PROCESSING UNIT

EP 4 280 638 A1

# FIG.4

EP 4 280 638 A1

181

183

187

185

100

BASE STATION

RF CIRCUIT — PROCESSOR — NETWORK INTERFACE

189

191

MEMORY

STORAGE

# FIG.5

UE 200

RADIO COMMUNICATION UNIT 210

STORAGE UNIT 220

PROCESSING UNIT 230

INFORMATION OBTAINING UNIT 231

CONTROL UNIT 233

COMMUNICATION PROCESSING UNIT 235

EP 4 280 638 A1

FIG.6

# FIG.7

UE 200        BASE STATION 100

S310

OBTAIN GAP RELATED INFORMATION

S320

RRC MESSAGE (GAP RELATED INFORMATION)

S330

OBTAIN GAP RELATED INFORMATION

S340

DETERMINE TIME GAP

S350

FURTHER RRC MESSAGE (CONFIGURATION INFORMATION)

S360

RESPONSE MESSAGE

S370

MONITOR PAGING OCCASION FOR PAGING WITHIN TIME GAP

# FIG.8

```
                    ┌──────────────┐                              ┌──────────────────┐
                    │    UE 200    │                              │ BASE STATION 100 │
                    └──────┬───────┘                              └─────────┬────────┘
      S410                 │                                                │
        ┌──────────────────┴──────────────────┐                            │
        │         DETERMINE TIME GAP           │                            │
        └──────────────────┬──────────────────┘                            │
      S420                 │                                                │
        ┌──────────────────┴──────────────────┐                            │
        │     OBTAIN GAP RELATED INFORMATION   │                            │
        └──────────────────┬──────────────────┘                            │
                           │   RRC MESSAGE (GAP RELATED INFORMATION)  S430  │
                           │───────────────────────────────────────────────▶│
                           │                                                │      S440
                           │                        ┌───────────────────────┴───────────┐
                           │                        │   OBTAIN GAP RELATED INFORMATION   │
                           │                        └───────────────────────┬───────────┘
      S450                 │                                                │
        ┌──────────────────┴──────────────────┐                            │
        │  MONITOR PAGING OCCASION FOR         │                            │
        │  PAGING WITHIN TIME GAP              │                            │
        └──────────────────┬──────────────────┘                            │
                           │                                                │
```

EP 4 280 638 A1

# FIG.9

# FIG.10

## INTERNATIONAL SEARCH REPORT

| International application No. |
|---|
| **PCT/JP2021/045585** |

### A. CLASSIFICATION OF SUBJECT MATTER

*H04W 4/50*(2018.01)i; *H04W 68/00*(2009.01)i; *H04W 88/06*(2009.01)i
FI: H04W68/00; H04W4/50; H04W88/06

According to International Patent Classification (IPC) or to both national classification and IPC

### B. FIELDS SEARCHED

Minimum documentation searched (classification system followed by classification symbols)

H04W4/50; H04W68/00; H04W88/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2020/0351818 A1 (COMCAST CABLE COMMUNICATIONS, LLC) 05 November 2020 (2020-11-05) paragraphs [0212]-[0222], [0257]-[0258], [0269], [0278], fig. 22A, 22B, 23 | 1-12, 14-15 |
| Y | paragraphs [0212]-[0222], [0257]-[0258], [0269], [0278], fig. 22A, 22B, 23 | 13 |
| Y | US 2020/0413421 A1 (QUALCOMM INCORPORATED) 31 December 2020 (2020-12-31) paragraphs [0082], [0087]-[0090], fig. 7 | 13 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/045585**

| Patent document cited in search report | Publication date (day/month/year) | Patent family member(s) | Publication date (day/month/year) |
|---|---|---|---|
| US 2020/0351818 A1 | 05 November 2020 | EP 3735049 A1 | |
| US 2020/0413421 A1 | 31 December 2020 | WO 2020/263456 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021003802 A

**Non-patent literature cited in the description**

- E-mail discussion: [Post111-e][917][Multi-SIM] Multi-Sim (vivo). *R2-2009325,* 02 November 2020
- **NOKIA ; NOKIA SHANGHAI BELL.** Scenarios and Impact analysis for Switching Notification. *R2-2009265,* 03 November 2020
- **QUALCOMM INCORPORATED.** Switching between two links for Multi-SIM. *R2-2009557,* 02 November 2020
- **SAMSUNG.** Discussion on switching mechanism for multi-SIM. *R2-2010350,* 02 November 2020